# EUROPEAN PATENT SPECIFICATION

(11) **EP 0 369 071 B1**
(45) Date of publication and mention of the grant of the patent: **20.07.1994**
(21) Application number: 88310745.0
(22) Date of filing: 14.11.1988
(51) Int. Cl.: B05D 7/24, B05D 7/22, B05D 3/00, C08J 3/24

(54) **Process for forming a coat**
Verfahren zur Herstellung einer Beschichtung
Procédé de formation d'un revêtement

(43) Date of publication of application: 23.05.1990
(73) Proprietor: MITSUI PETROCHEMICAL INDUSTRIES, LTD., Tokyo 100 (JP)
(72) Inventor: Iizuka, Hiroshi, Ichihara-shi Chiba (JP); Ishiwata, Shuichi, Ichihara-shi Chiba (JP)
(74) Representative: Myerscough, Philip Boyd

(56) References cited:
- EP-A- 0 106 754
- EP-A- 0 250 663
- PATENT ABSTRACTS OF JAPAN, vol. 12, no. 446 (C-546)[3293], 24th November 1988;& JP-A-63 171 680 (EPOZOOLE K.K.) 15-07-1988

## Description

This invention relates to a process for forming a coat, and more particularly to a process for forming an epoxy resin coat on an inside surface of a hot water pipe, a bath tub or the like.

Heretofore, Bisphenol A type epoxy resins have been used mainly as surface covering coating materials for corrosion protection or surface protection purposes. Generally, these Bisphenol A type epoxy resins are used in coating compositions after adjusting the viscosity of the compositions by addition to said resins of reactive diluents, plasticizers and solvents according to the purpose for which the coating compositions are used and the coating process employed therefor. As curing agents used in such coating compositions referred to above, there are used generally polyamideamine resins, modified polyamine resins, polyamine resins or mixtures thereof.

In the coating compositions conventionally comprising such components as mentioned above, however, there are involved such problems as will be described herein below. Most of the cured products obtained have a glass transition temperature of less than 60°C and, for this reason, such cured products, when used as coating materials for structure members which are exposed to fluids having a temperature higher than 60°C such as hot water or the like, are found insufficient in heat resistance and adhesive properties, and thus they are hardly fit for use.

Pipes such as hot water pipes and cryogenic heating pipes tend to develop red rust on their inner surfaces. In some cases, rust can largely grow in the form of a lump. When such rust develops on the inner surface of a pipe, the ease with which water flows through the pipe is greatly lowered. In order to solve such problems, the inner surface of a hot water pipe can be provided with a heat-resistant coat.

Plastic unit baths come into contact with high temperature water for a long period of time, and therefore deterioration and fading of the plastic occurs. In order to solve such problems, the surface of the plastic is provided with a heat-resistant coat.

In order to form a heat-resistant coat on the inner surface of a pipe such as a hot water pipe or a cryogenic heating pipe, the surface of a unit bath or the like, it is necessary to apply a coating composition to the substrate to be coated, followed by curing the composition by heating. Heretofore, heating of coated substrates such as pipes and unit baths has been effected by infrared irradiation or by hot air blowing. However, such heating processes exhibit inferior thermal efficiency and are economically remarkably disadvantageous.

Further, there has been a problem in that upon curing an epoxy coat, the resulting coat can undesirably foam in some cases.

We have now found that when a specific epoxy resin composition and a specific curing process are used to coat a substrate such as the inner surface of a hot water pipe, the problems described above are solved.

The invention is intended to solve such problems associated with the prior art as mentioned above, and an object of the invention is to provide a process for forming a coat which has excellent heat resistance, erosion resistance, adhesive properties and resistance to leaching of organic constituents contained in the coat when exposed to hot water. The invention also seeks to provide a process in which the coat exhibits no foaming and can be efficiently formed on a substrate such as a hot water pipe or a unit bath without using an infrared lamp and without blowing hot air.

Accordingly, the invention provides a process for forming a coat on a substrate which comprises the steps of:
(a) keeping a coat formed on a substrate using a composition comprising an epoxy resin containing units of Bisphenol F or Bisphenol AD and a curing agent, at ambient temperature for no more than 72 hours;
(b) contacting said coat with a heated liquid having a temperature of less than 60°C to precure the coat; and thereafter;
(c) contacting said precured coat with a heated liquid having a temperature of at least 60°C to obtain a coat having a glass transition temperature of from 50°C to 130°C.

First, the epoxy resin composition used to form a coat in the invention will be described.

It is preferable that the epoxy resin composition is in the form of a coating composition and therefore an epoxy resin composition in the form of a coating composition will be described hereinafter. However, it is not necessarily required that components from which the epoxy resin composition is prepared are in the form of a coating composition.

The epoxy resin composition used according to the invention comprises at least one epoxy resin containing units derived from bis(hydroxyphenyl)methane or 2,2-bis(hydroxyphenyl)ethane. The composition may also comprise an epoxy resin containing units of 2,2-bis(hydroxyphenyl)propane. These bisphenols are represented by the following formulae. 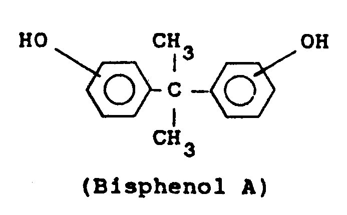
Such bisphenols can be obtained by condensation of a lower alkyl group-containing carbonyl compound such as formaldehyde, acetaldehyde or acetone with phenol in the presence of acid, and a process for the production of these bisphenols is well known hitherto.

Usually, Bisphenol F is obtained as a mixture comprising about 10-25 mol% of bisphenol having hydroxyl groups at the o- and o'-positions, about 35-60 mol% of bisphenol having hydroxyl groups at the o- and p'-positions and 20-55 mol% of bisphenol having hydroxyl groups at the p- and p'-positions. Bisphenol AD is usually obtained as a mixture in which at least about 80 mol% of bisphenol having hydroxyl groups at the p- and p'-positions is present. Bisphenol A is usually obtained as a mixture in which at least 98 mol% of bisphenol having hydroxyl groups at the p- and p'-positions is present.

By virtue of polycondensation of such bisphenols with epichlorohydrin, the epoxy resins (hereinafter sometimes called Bisphenol F type epoxy resins, Bisphenol AD type epoxy resins or Bisphenol A type epoxy resins) used in the present invention are obtained.

Bisphenol F type epoxy resins, Bisphenol AD type epoxy resins and Bisphenol A type epoxy resins can be formed by a reaction represented by the following reaction scheme: 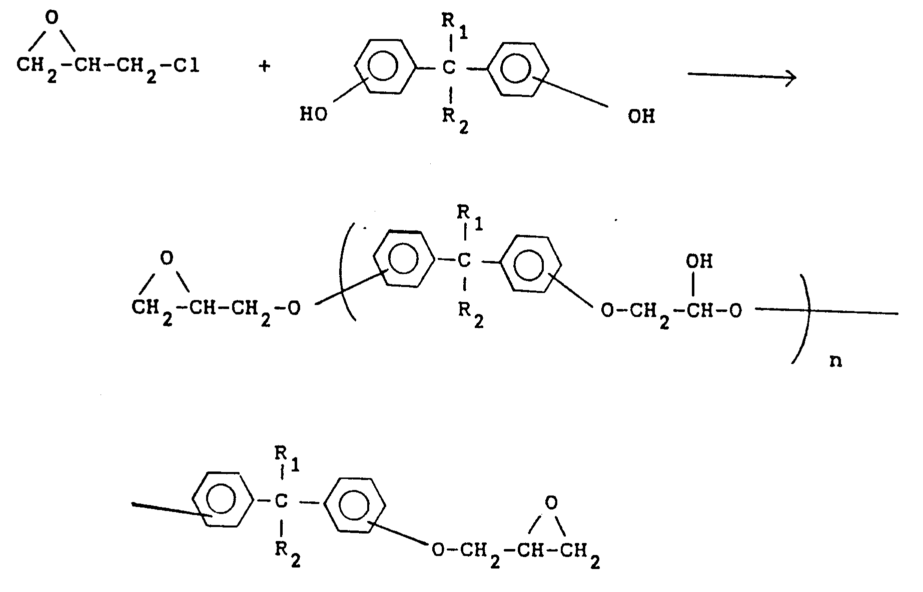
wherein R₁ and R₂ represent a hydrogen atom or an alkyl group containing from 1 to 3 carbon atoms.

These Bisphenol F type epoxy resins or Bisphenol AD type epoxy resins preferably have an EEW (an epoxy equivalent weight) from 165 to 185, and Bisphenol A type epoxy resins preferably have an EEW from 185 to 195.

In addition to Bisphenol F type epoxy resins, Bisphenol AD type epoxy resins, and Bispheol A type epxoy resins, other known epoxy resins can also be used as a part of the epoxy resin component used in the invention. Preferably usable known epoxy resins are, for example, novolak type epoxy resins having an EEW of from 165 to 185, orthocresolnovolak type epoxy resins having an EEW of from 210 to 240, and trimethylolpropane triglycidyl ethers having an EEW of from 130 to 145.

The epoxy resin used in the invention comprising, as an essential component, Bisphenol F type epoxy resin or Bisphenol AD type epoxy resin preferably has a viscosity of no more than 10 Pas (100 poises) at 25°C. The epoxy resin can further be incorporated with a small amount of a polyfunctional reactive diluent and, in this case, the diluent is preferably used in such an amount that the resulting cured product will not come to have a glass transition temperature of below 60°C.

The epoxy resins mentioned above are desirably used in the compositions in an amount of from 25 to 80% by weight, preferably from 35 to 70% by weight.

Examples of the curing agents used in the compositions used in the present invention are amine type compounds having a viscosity of no more than 100 poises at 25°C. Concretely, preferably usable as the curing agents are epoxy resin-modified isophorone diamine, epoxy resin-modified 3,3'-dimethyl-4,4'-dicyclohexylaminomethane, epoxy resin-modified m-xylenediamine, etc.

Such curing agents are desirably used in the compositions in an amount of from 8 to 40% by weight, preferably from 15 to 33% by weight. Viewed at another angle, such curing agents are used in such a manner that active hydrogen present in the curing agent falls within the range of from 0.8 to 1.2, preferably from 0.9 to 1.1 equivalents based on one equivalent of the epoxy group of the epoxy resin.

No more than 20 % by weight, of plasticizers can be optionally incorporated in the composition used in the present invention.

The coating compositions used in the present invention can be further incorporated with extender pigments or coloring pigments, or both.

Preferably usable as the extender pigments are inorganic powder materials having a true specific gravity of from 0.3 to 4.5 g/cm³, an oil absorption of at least 11 ml and an average particle diameter of no more than 10 »m. Such inorganic powder materials concretely include calcium carbonate, magnesium carbonate, silica, silica alumina, glass powder, glass beads, asbestos, mica, graphite, barium sulfate, aluminum hydroxide, talc, kaolin, acid clay, activated clay, bentonite, diatomaceous earth, montmorillonite, dolomite, etc. Of those exemplified above, particularly preferred are calcium carbonate, silica, barium sulfate, talc and kaolin.

Preferably usable as the coloring pigments are fine powder materials having a specific gravity of less than 5.7 g/cm³ and an average particle diameter of less than 1 »m. Usable inorganic coloring pigments concretely include titanium oxide, zinc white, carbon black, iron oxide red, cadmium red, titanium yellow, chrome oxide green, cobalt green, ultramarine, Prussian blue, cobalt blue, cerulean blue, cobalt violet, mars violet etc., and usable organic coloring pigments include permanent red, Hansa yellow, benzidine yellow, lake red, phthalocyanine blue, phthalocyanine green, etc. Of the coloring pigments exemplified above, particularly preferred are titanium oxide, ultramarine, cobalt blue, phthalocyanine blue, phthalocyanine green, chrome oxide green, titanium yellow and iron oxide red.

Furthermore, the coating compositions used in the present invention can be incorporated, if necessary, with such additives as defoamers, leveling agents and thixotropic agent, or additional components such as polyfunctional reactive diluents, curing accelerators, etc.

The coating composition used in the present invention can be formed as a two-pot liquid composition, one composed of the epoxy resin and the other composed of the curing agent. For instance, the epoxy resin, extender pigment and/or coloring pigment may be kneaded together to prepare a main composition, while the curing agent, extender pigment and/or coloring pigment may be kneaded together to prepare a curing agent composition. By virtue of mixing the main composition with the curing agent composition, a curable coating composition can be prepared whenever it is to be used.

The thus prepared coating composition is applied onto the surface of a substrate such as the inner surface of a hot water pipe or the wall surface of a unit bath by a conventional method such as spraying or brushing. Application of the composition to the inner surface of the hot water pipe is preferably carried out by spraying the composition over the inner surface by means of fluids (gases). For instance, application of the coating composition to the inner surface of the hot water pipe is preferably carried out while feeding the coating composition to the inner portion of the pipe with air or an nitrogen at a flow rate of at least 20 m/sec.

The process for forming a coat according to the invention will now be described. The coating composition is applied to a substrate as described above to form a coat, and thereafter the coat is cured by steps (a)-(c).
(a) A step of keeping the coat at ambient temperature for no more than 72 hours, preferably from 1 to 72 hours.
   We have found that foaming of the coat in the subsequent curing step can be effectively reduced by keeping the coat formed on the substrate at ambient temperature for no more than 72 hours, preferably from 1 to 72 hours.
   By "ambient temperature" is meant from about 15°C to 35°C.
   In order to keep the coat at ambient temperature, the coat may be allowed to stand in an atomsphere at ambient temperature, preferably in air. Optionally, the coat may be substantially statically brought into contact with a liquid at ambient temperature, preferably water.
(b) A step of contacting the coat which has been kept at ambient temperature for no more than 72 hours, preferably from 1 to 72 hours, as described above with a heated liquid having a temperature of less than 60°C, preferably a temperature of less than room temperature plus 25°C, to precure the coat.
   A pipe having the thus precured coat is then practically used as a hot water pipe or the like to cure the coat.
(c) A step of contacting the coat precured in step (b) described above with a heated liquid having a temperature of at least 60°C, preferably from 60° to 98°C, to cure the coat so that the glass transition temperature of the resulting coat becomes from 50° to 130°C, preferably from 60° to 130°C.

Optionally, in carrying out step (b) or (c), for example, step (c) per se may be carried out in a two-stage or multistage process. That is, for example, the two-stage process may be carried out by contacting the coat with a heated liquid at 65°C and then contacting it with a heated liquid at 75°C.

In steps (b) and (c) described above, purified water, tap water, circulating water for air conditioning, a saturated calcium chloride aqueous solution, process water or the like is used as the heated liquid.

As described above, in the invention, the coat formed on the substrate is brought into contact with liquids having specific temperatures to cure it, and therefore it is unnecesary to use an infrared lamp, a hot air generator or the like in order to cure the coat. Thus, the process is very efficient. Further, in the invention, a composition containing a specific epoxy resin and a curing agent is used, and therefore there is obtained a coat which is excellent in heat resistance, which is not peeled off from the substrate even if the coat comes into contact with liquid such as warm water or hot water, in which large amounts of organic constituents are not leached from the coat when the coat is exposed to hot water, and which is free from foaming.

The invention is illustrated below with reference to Examples, but it should be construed that the invention is in no way limited thereto.

### Preparation of a coating composition (1)

A main ingredient composition and a curing agent composition having their respective compositions as indicated below were prepared and mixed together to obtain a coating composition (1).

### Main ingredient composition:

A mixture of 100 parts of Bisphenol AD type epoxy resin (Trade name Epomick ®R-710 availabe from Mitsui Petrochemical Industries, Ltd., viscosity 30 poises/25°C, epoxy equivalent weight 165-185), 18 parts of talc, 13 parts of titanium oxide and 1.5 parts of an additive was kneaded with a triple roll mill to obtain a main ingredient composition.

### Curing agent composition:

A mixture of 100 parts of isophorone diamine containing epoxy resin-modified polyamine (viscosity 47 poises/25°C, active hydrogen equivalent 83), 20 parts of talc and 10 parts of titanium oxide as extender pigments, 0.7 part of ultramarine as a coloring pigment and 1.9 parts of an additive was kneaded with a triple roll mill to obtain a curing agent composition.

In preparing the coating composition (1), the thus obtained main ingredient and curing agent compositions were mixed together in the proportion of 100 parts to 50 parts (weight ratio).

### Preparation of a coating composition (2)

A main ingredient composition and a curing agent composition having their respective compositions as indicated below were prepared and mixed together to obtain a coating composition (2).

### Main ingredient composition:

Same as the coating composition (1).

### Curing agent composition:

A mixture of 100 parts of 3,3'-dimethyl-4,4'-dicyclohexyl amino methane containing epoxy resin-modified polyamine (viscosity 42 poises/25°C, active hydrogen equivalent 71), 54.4 parts of barium sulfate as an extender pigment, 0.7 part of ultramarine as a coloring pigment and 1.9 parts of an additive was kneaded with a triple roll mill to prepare a curing agent composition.

In preparing the coating composition, the thus obtained main ingredient and curing agent compositions were mixed together In the proportion of 100 parts to 50 parts (weight ratio).

### Preparation of a coating composition (3)

The coating composition (3) was prepared as in the coating composition (1) with the exception that Bisphenol F type epoxy resin (Bisphenol F glycidyl ether, viscosity 30 poises/25°C, epoxy equivalent weight 171-175) was used in place of the Bisphenol AD type epoxy resin used in the main ingredient composition (1).

### Preparation of a comparative coating composition (1)

Comparative coating composition (1) was prepared as coating composition (1) with the exception that a main ingredient composition and a curing agent composition having their respective compositions as indicated below were used.

### Main ingredient composition:

A mixture of 100 parts of Bisphenol A type epoxy resin (Epomick ® 140 available from Mitsui Petrochemical Industries, Ltd., epoxy equivalent weight 185-195 viscosity 130 poises/25°C), 11 parts of butylglycidyl ether (epoxy equivalent weight 138), 20 parts of talc and 14.8 parts of titanium oxide as extender pigments, and 2.2 parts of an additive was kneaded to prepare a main ingredient composition.

### Curing agent composition:

A mixture of 100 parts of 4,4'-diaminodiphenyl methane-containing epoxy resin modified aromatic polyamine (active hydrogen equivalent 100-120), 15 parts of talc as an extender pigment, 0.5 parts of ultramarine as a coloring pigment, and 5 parts of an additive was kneaded with a triple roll mill to obtain a curing agent composition.

### Reference Example 1

The coating composition (1) was applied, by a brush to a steel plate (75 mm x 150 mm x 9 mm) wherein its surfaces had been degreased with solvent and thereafter subjected to a steel grit treatment.

This coat was allowed to stand for 24 hours at room temperature, and immersed in warm water at 40°C for one hour to cure it. The glass transition temperature Tg of the resulting coat was measured. The results are shown in Table 1.

### Example 1

A steel plate coated with a coating composition as in Reference Example 1 was allowed to stand for 24 hours at room temperature, thereafter immersed in warm water at 40°C for one hour and then in warm water at 60°C for 30 minutes to cure the coating composition. The Tg of the resulting cured coat was measured. The results are shown in Table 1.

### Example 2

A steel plate coated with a coating composition as in Reference Example 1 was allowed to stand for 24 hours at room temperature, thereafter immersed in warm water at 40°C for 60 minutes, in warm water at 60°C for 30 minutes and then in warm water at 90°C for 60 minutes to cure the ccating composition. The Tg of the resulting cured coat was measured. The results are shown in Table 1.

### Example 3

Coating composition (2), coating composition (3) and comparative coating composition (1) were used and their coats were cured as in Example 2. The Tg.s of the resulting coats were measured. The results are shown in Table 1.

The glass transition temperatures of the coats were measured as follows: The coats were cured under the conditions described in Examples, and thereafter these coats were peeled off from the steel plates. Moisture contained in the released coats was then removed under reduced pressure (5 mm Hg), and the glass transition temperatures (Tg.s) of the dried coats were measured by means of DSC (a differential scanning calorimeter manufactured by Seiko Denshi Kogyo).

**TABLE 1**

| Example No. | Glass Transition Temperature (°C) |
|---|---|
| Ref. Example 1 | 52 |
| Example 1 | 68 |
| Example 2 | 90 |
| Example 3 | 106 (Coating Composition(2)) |
| | 86 (Coating Composition(3)) |
| | 83 (Comparative Coating Composition(1)) |

### Example 4

The coating composition (1) was applied, by a brush, to a glass plate wherein its surfaces had been degreased with a solvent.

The resulting coat was allowed to stand for 48 hours at room temperature, thereafter immersed in warm water at 50°C for 2 hours and then immerrsed in warm water at 90°C for one hour to cure the coat. The glass transition temperature Tg of the resulting coat was measured. The results are shown in Table 2.

### Example 5

A glass plate coated with a coating composition as in Example 4 was allowed to stand for 48 hours at room temperature, thereafter immersed in warm water at 50°C for one hour and then in warm water at 70°C for one hour to cure the coat. The Tg of the resulting cured coat was measured. The results are shown in Table 2.

### Example 6

A glass plate coated with a coating composition as in Example 4 was allowed to stand for 48 hours at room temperature, thereafter immersed in warm water at 50°C for one hour and then in warm water at 90°C for one hour to cure the coat. The Tg of the resulting cured coat was measured. The results are shown in Table 2.

### Example 7

The coating composition (2) was used, and a coat was cured as in Example 6. The Tg of the resulting coat was measured. The results are shown in Table 2.

### Example 8

The coating composition (3) was used, and a coat was cured as in Example 6. The Tg of the resulting coat was measured. The results are shown in Table 2.

**TABLE 2**

| Example No. | Glass transition Temperature (°C) |
|---|---|
| 4 | 92 |
| 5 | 86 |
| 6 | 91 |
| 7 | 106 |
| 8 | 90 |

## Claims

1. A process for forming a coat on a substrate which comprises the steps of:
(a) keeping a coat formed on a substrate using a composition comprising an epoxy resin containing units of Bisphenol F or Bisphenol AD and a curing agent, at ambient temperature for no more than 72 hours;
(b) contacting said coat with a heated liquid having a temperature of less than 60°C to precure the coat; and thereafter;
(c) contacting said precured coat with a heated liquid having a temperature of at least 60°C to obtain a coat having a glass transition temperature of from 50°C to 130°C.

2. A process according to claim 1 wherein the temperature of the heated liquid used in step (b) is less than ambient temperature plus 25°C.

3. A process according to claim 1 or 2 wherein the glass transition temperature of the resulting coat is from 60°C to 130°C.

4. A process according to any one of the preceding claims wherein the coat is formed on the inner surface of a hot water pipe or on the inner surface of a plastics bath.

## Patentansprüche

1. Verfahren zur Herstellung eines Überzugs auf einem Substrat, wobei man
(a) einen Überzug, der auf einem Substrat unter Verwendung einer Masse, umfassend ein Epoxyharz, enthaltend Einheiten von Bisphenol F oder Bisphenol AD, und ein Härtungsmittel, gebildet worden ist, nicht länger als 72 h bei Umgebungstemperatur hält;
(b) diesen Überzug mit einer erwärmten Flüssigkeit mit einer Temperatur von weniger als 60°C zusammenbringt, um den Überzug vorzuhärten, und anschließend
(c) den vorgehärteten Überzug mit einer erwärmten Flüssigkeit mit einer Temperatur von mindestens 60°C in Berührung bringt, um einen Überzug zu erhalten mit einer Glasübergangstemperatur von 50 bis 130°C.

2. Verfahren nach Anspruch 1, wobei die Temperatur der erwärmten Flüssigkeit in Stufe (b) niedriger ist als Umgebungstemperatur plus 25°C.

3. Verfahren nach Anspruch 1 oder 2, wobei die Glasübergangstemperatur des erhaltenen Überzugs 60 bis 130°C beträgt.

4. Verfahren nach einem der vorangehenden Ansprüche, wobei der Überzug auf einer Innenseite einer Heißwasserleitung oder auf der Innenseite eines Kunststoffbades erzeugt wird.

## Revendications

1. Procédé de formation d'un revêtement sur un substrat, comprenant les étapes de :
(a) maintient d'un revêtement formé sur un substrat par utilisation d'une composition comprenant une résine époxy contenant des unités de bisphénol F ou de bisphénol AD et un agent de durcissement, à température ambiante pendant au plus 72 heures,
(b) mise en contact dudit revêtement avec un liquide chauffé ayant une température inférieure à 60 °C afin de prédurcir le revêtement, suivie de
(c) la mise en contact dudit revêtement prédurci avec un liquide ayant une température d'au moins 60 °C afin d'obtenir un revêtment ayant une température de transition vitreuse comprise entre 50 °C et 130 °C.

2. Procédé conforme à la revendication 1, dans lequel la température du liquide utilisé dans l'étape (b) est inférieure à une température de 25 °C supérieure à la température ambiante.

3. Procédé conforme à la revendication 1 ou 2, dans lequel la température de transition vitreuse du revêtement résultant est comprise entre 60 °C et 130 °C.

4. Procédé conforme à une quelconque des revendications précédentes, dans lequel le revêtement est formé sur la surface interne d'une canalisation d'eau chaude ou sur la surface interne d'un bain en plastique.
